# EUROPEAN PATENT APPLICATION

(11) **EP 1 850 218 A2**
(43) Date of publication of application: **31.10.2007**
(21) Application number: 07105100.7
(22) Date of filing: 28.03.2007
(51) Int. Cl.: G06F 3/048, G06F 1/16, G06F 3/03

(54) **Method and apparatus to control screen orientation of user interface of portable device**

(30) Priority: 28.04.2006 KR 20060038862; 09.06.2006 KR 20060051983; 24.07.2006 KR 20060069395; 20.09.2006 KR 20060091183
(71) Applicant: Samsung Electronics Co., Ltd., Suwon-si, Gyeonggi-Do (KR)
(72) Inventor: Park, Cheul-hae, Yeongton-dong, Yeongtong-gu,Suwon-si Gyeonggi-do (KR); Kim, Jeong-goo, Maetan 3-dong, Yeongtong-gu, Suwon-si Gyeonggi-do (KR); Kim, Boo-sang, Gwonseon-gu,Suwon-si Gyeonggi-do (KR); Cho, Kyung-suk, Gyeonggi-do (KR); Lee, Jong-hyun, Gyeonggi-do (KR); Park, Jong-woo, Gwanak-gu Seoul (KR); Park, Soon, Sanghyeon-dong, Suji-gu,Yongin-si Gyeonggi-do (KR); Cho, Jang-hwan, Yeongtong-gu, Suwon-si Gyeonggi-do (KR); Jeong, Byong-woo, I-dong, Gwanak-gu Seoul (KR)
(74) Representative: Zimmer, Franz-Josef

(57) **Abstract**

A method and an apparatus to automatically switch a graphic user interface and a key interface of a portable electronic device between horizontal and vertical screen orientation modes based on screen orientation of the portable electronic device, he method including sensing a screen orientation of the portable electronic device and changing a display orientation of the graphic user interface and a key interface by changing key mapping according to the sensed screen orientation of the portable electronic device.

## Description

### BACKGROUND OF THE INVENTION

### 1. Field of the Invention

Aspects of the present invention relate to a portable electronic device having a function of a user interface, and more particularly, to a method and an apparatus to automatically switch a graphic user interface and a key interface of a portable electronic device between horizontal and vertical screen orientation modes based on a screen orientation of the portable electronic device.

### 2. Description of the Related Art

Conventionally, portable electronic devices (such as MPEG Layer-3 (MP3) players, cellular phones, and game devices) include a graphic user interface for convenience of use. The graphic user interface informs a user of a current operational status of the portable electronic device and enables the user to operate the portable electronic device conveniently.

However, in a conventional portable electronic device, a graphic user interface and/or a key interface are configured to operate in only one screen orientation mode (that is, either a horizontal or a vertical screen orientation mode). Accordingly, when a user views the graphic user interface of the portable electronic device from a direction different than the currently displayed direction, it is difficult for the user to recognize the graphic user interface. For example, when the portable electronic device is rotated by 90 degrees, the displayed graphic user interface and/or the key interface of the portable electronic device rotates by 90 degrees, and, accordingly, there is a disadvantage in that the user may have to tum his head. In a portable electronic device which has a pivoting function, when the portable electronic device is rotated by 90 degrees in a certain direction and the displayed graphic user interface of the portable electronic device is rotated by 90 degrees in the opposite direction, the screen of the portable electronic device can be viewed correctly. However, in that case, the key interface remains in a status rotated by 90 degrees, and, accordingly, there is confusion in key operations of the user.

### SUMMARY OF THE INVENTION

Aspects of the present invention provide a method and apparatus to automatically switch a graphic user interface and a key interface of a portable electronic device between horizontal and vertical screen orientation modes based on a screen orientation of the portable electronic device.

According to an aspect of the present invention, there is provided a method of controlling a user interface of a portable electronic device comprising: sensing a screen orientation of the portable electronic device; and changing a display orientation of a graphic user interface and an input interface by changing an input mapping according to the sensed screen orientation of the portable electronic device.

According to another aspect of the present invention, there is provided a device to control a display orientation of a user interface of a portable electronic device, the device comprising: a screen orientation sensing unit to sense a screen orientation of the portable electronic device by detecting a magnet fixed to the portable electronic device; a display unit to display a graphic user interface; an input unit including an input interface to receive inputs from a user; and a controller to change a display orientation of the graphic user interface according to the screen orientation sensed by the screen orientation sensing unit, and to change the input interface by changing an input mapping according to the sensed screen orientation.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the invention will become apparent and more readily appreciated from the following description of the embodiments, taken in conjunction with the accompanying drawings of which
FIGs. 1A and 1B are diagrams illustrating an external appearance of a portable electronic device having a user interface with a pivot function according to an embodiment of the present invention;
FIG. 2 is a block diagram illustrating a device to control a screen orientation of a user interface of a portable electronic device according to an embodiment of the present invention;
FIG. 3 is a flowchart illustrating a method of controlling a screen orientation of a user interface of a portable electronic device according to an embodiment of the present invention;
FIG. 4 is a detailed flowchart of controlling a screen orientation of the user interface of the portable electronic device illustrated in FIG. 3;
FIG. 5 is a diagram illustrating a processing of inputs from a key-input unit illustrated in FIG. 3 according to an embodiment of the present invention;
FIGs. 6A and 6B are diagrams illustrating user interfaces displayed in vertical and horizontal screen orientation modes when the portable electronic device is closed or slid open according to an embodiment of the present invention;
FIGs. 7A and 7B are diagrams illustrating a method of displaying in the vertical and horizontal screen orientation modes illustrated in FIGs. 6A and 6B;
FIG. 8A is a diagram illustrating hardware keys of a portable electronic device according to an embodiment of the present invention; and
FIG. 8B illustrates a key mapping table for keys represented in the input interface of the portable electronic device illustrated in FIG. 8A.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

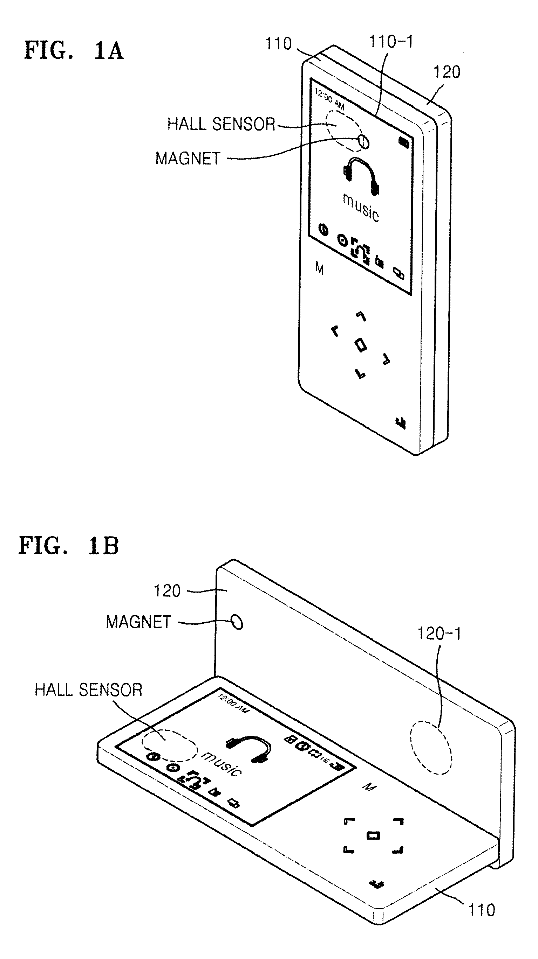

FIGS. 1A and 1B are diagrams illustrating an external appearance of a portable electronic device having a user interface with a pivot function according to an embodiment of the present invention.

Referring to FIG. 1A, a portable electronic device includes a first body 120, which corresponds to a housing of the main body of the electronic device, a second body 110, which corresponds to a user interface (UI) housing, and a sliding unit (not shown).

The first body 120 includes a speaker unit 120-1, and the second body 110 includes a display unit 110-1. The sliding unit is a mechanical assembly in which a support member, a holder, etc., are assembled. The sliding unit slides the second body 110 with respect to the first body 120. As the second body 110 is slid with respect to the first body 120, the speaker unit 120-1 is exposed.

Referring to FIG. 1A, conventionally, a portable electronic device is used in a vertical display orientation mode. That is, a top and a bottom of a display of the portable electronic device are vertically related. The portable electronic device includes a user interface (UI) housing 110 and a mainframe housing 120 combined with each other. In the UI housing 110, a hall sensor to sense a screen orientation of the portable electronic device is attached. In the mainframe housing 120, a magnet is attached. The installation positions and/or quantity of the hall sensors and the magnets may vary according to the portable electronic device used. The hall sensor senses a sliding of the second body 110 with respect to the first body 120. When the portable electronic device is used in a conventional mode, such as when the portable electronic device is closed, the hall sensor is attached to the magnet and the hall sensor accordingly generates a logic value of "0" corresponding to a vertical screen orientation mode.

FIG. 1B is a diagram illustrating an external appearance of the portable electronic device according to an embodiment when the portable electronic device is slid so as to settle into a horizontal screen orientation mode after being used in a vertical screen orientation mode. The UI housing 110 of the portable electronic device is placed in a horizontal screen orientation mode. That is, the top and the bottom of the display of the portable electronic device are horizontally related. At this time, the UI housing 110 and the mainframe housing 120 are parted from each other. The hall sensor generates a logic value of "1" corresponding to a horizontal screen orientation mode, since the hall sensor is parted from the magnet.

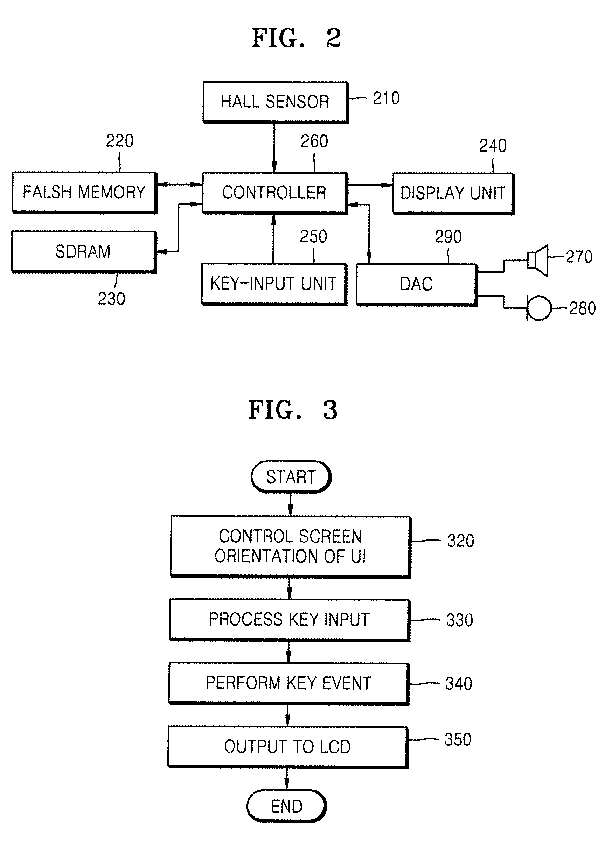

FIG. 2 is block diagram illustrating a device to control a screen orientation of a user interface of a portable electronic device according to an embodiment of the present invention. The device to control a screen orientation of a user interface of the portable electronic device illustrated in FIG. 2 includes a hall sensor 210, a flash memory 220, a synchronous dynamic random access memory (SDRAM) 230, a display unit 240, a key-input unit 250, a controller 260, and a digital-to-analog converter (DAC) 290.

The hall sensor 210 senses horizontal and vertical screen orientation modes of the portable electronic device by identifying whether the portable electronic device is, for example, closed or open. In other words, the hall sensor 210 senses the magnet, according to an aspect, and outputs a logic signal "0" corresponding to the vertical screen orientation mode when the portable electronic device is closed (or the top and the bottom of the display are vertically related). On the other hand, the hall sensor 210 does not sense the magnet and outputs a logic signal "1" corresponding to the horizontal screen orientation mode when the portable electronic device is open (or the top and the bottom of the display are horizontally related).

The flash memory 220 stores audio and/or video data and/or pictures. In particular, the flash memory 220 stores first graphical user interface information regarding the horizontal screen orientation and second graphical user interface information regarding the vertical screen orientation. In particular, the flash memory 220 stores first graphical user interface information regarding the horizontal screen orientation and second graphical user interface information regarding the vertical screen orientation. However, it is understood that, according to other aspects, other storage devices, such as a hard drive, may be used.

The SDRAM 230 stores a program to control general operations of the portable electronic device and a program to control the screen orientation of the user interface according to an embodiment of the present invention. The SDRAM 230 may also temporarily store data generated while the programs are being executed. However, it is understood that, according to other aspects, other storage devices or memory types may be used.

The key-input unit 250 includes keys to input number and letter information and function keys to set various functions. However, it is understood that, according to other aspects, other devices, such as a rotatable dial and/or a touch screen, may be used to input functions and information.

The controller 260 controls general operations of the device and decodes the audio and/or video data stored in the flash memory 220. In addition, the controller 260 detects the screen orientation of the portable electronic device using a signal received from the hall sensor 210 and changes a display orientation of the user interface according to the screen orientation. In other words, according to an aspect, the controller 260 checks a sliding on/off status indicating whether the device is in a sliding-on or sliding-off status using the hall sensor 210, determines whether there is a change in the screen orientation of the portable electronic device according to the checked sliding on/off status, and simultaneously outputs information about the graphic user interface, in terms of the changed screen orientation, to the display unit 240 and changes the key interface according to a change in key mapping. At this time, the information on the graphic user interface is stored in coordinate tables, each corresponding to either the horizontal or the vertical screen orientation. For example, the controller 260 displays on the display unit 240 the first graphical user interface information regarding the horizontal screen orientation and the second graphical user interface information regarding the vertical screen orientation, according to an output signal of the hall sensor 210. Accordingly, the controller 260 displays a first graphical user interface (GUI) corresponding to first key mapping and switches the first GUI corresponding to the first key mapping to a second GUI corresponding to second key mapping according to a change in the screen orientation of the device detected using the hall sensor 210. An interrupt method or a polling method in the controller 260 may be used to detect a signal from the hall sensor 210.

The display unit 240 displays the information on the graphic user interface output from the controller 260. The display unit 240 may be implemented by a liquid crystal display (LCD). In the LCD, a register used to register a change in the screen orientation mode is included. Accordingly, when a value stored in the register is changed, the display orientation mode is changed.

The DAC 290 converts the audio data decoded by the controller 260 into an analog audio signal and outputs the converted analog audio signal to a speaker 270, an earphone 280, and/or an external device.

FIG. 3 is a flowchart illustrating a method of controlling a screen orientation of a user interface of a portable electronic device according to an embodiment of the present invention. First, the orientation of the user interface is controlled according to the screen orientation of the portable electronic device (operation 320). According an aspect, the screen orientation of the portable electronic device is checked according to a sliding on/off status. In other words, in controlling the orientation of the user interface, a change in the screen orientation of the portable electronic device is detected using the hall sensor 210, and the graphic user interface is displayed while changing a key interface according to the changed screen orientation. The controlling of the screen orientation of the user interface includes displaying a first GUI corresponding to first key mapping and switching the first GUI corresponding to a second GUI corresponding to second key mapping when a change in the screen orientation of the device is detected by the hall sensor.

Then, an input is processed according to a value of a key input from the key-input unit 250 (operation 330). Thereafter, a function of the device corresponding to the input is performed (operation 340). Then, when there is a changed graphic user interface, the graphic user interface is output to a display unit 240, such as an LCD (operation 350). The operations 320, 330, 340, and 350 are repeated after the portable electronic device is turned on until the device is turned off.

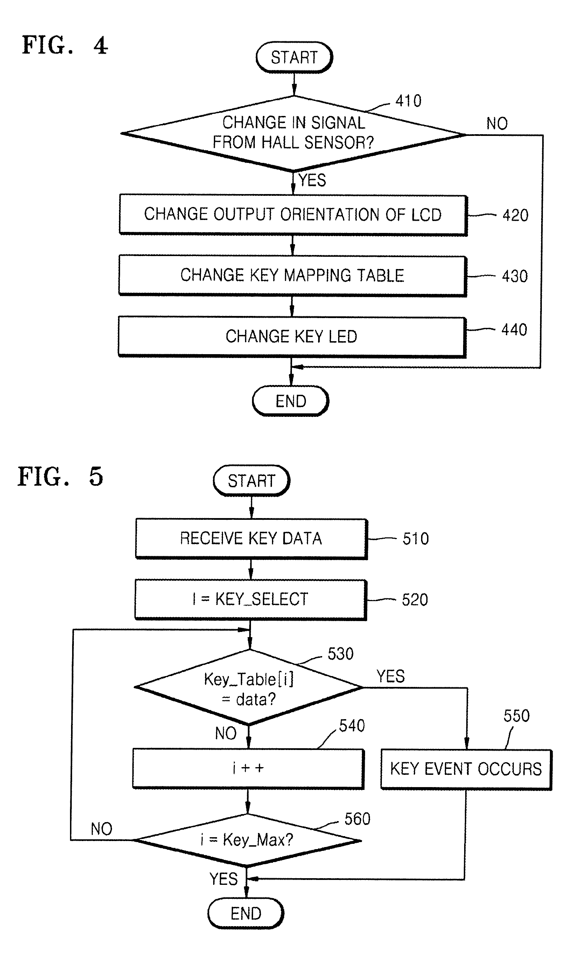

FIG. 4 is a detailed flowchart of controlling a screen orientation of a user interface of the portable electronic device (operation 320) illustrated in FIG. 3. First, a flag indicating a current screen orientation is set. For example, when the portable electronic device is in a vertical screen orientation (a top and a bottom of a display are vertically related), the flag is set to "0." When the portable electronic device is in a horizontal screen orientation (the top and the bottom of the display are horizontally related), the flag is set to "1."

Thereafter, a change in a signal from the hall sensor is checked (operation 410). For example, the hall sensor generates a signal "1" corresponding to the horizontal screen orientation when the top and the bottom of the display of the portable electronic device are horizontally related (for example, when the portable device is open). The hall sensor generates a signal "0" corresponding to the vertical screen orientation when the top and the bottom of the display of the portable electronic device are vertically related (for example, when the portable device is closed). Accordingly, the controller 260 can detect a change in the screen orientation by comparing the signal received from the hall sensor and the flag indicating the current screen orientation.

At this time, when the hall sensor signal is changed, see Fig. 4, the status of the flag indicating the current screen orientation is changed and data in the register storing the display orientation is changed so as to register that the display orientation of the display unit 240, such as an LCD, is changed (operation 420). A key mapping table is changed simultaneous to the changing of the display orientation in order to switch the key interface appropriately to the changed screen orientation mode (operation 430). Furthermore, according to an aspect, LED settings for the keys are changed according to the changed key mapping (operation 440).

On the other hand, when the hall sensor signal is not changed, the controlling of the screen orientation of the user interface is completed.

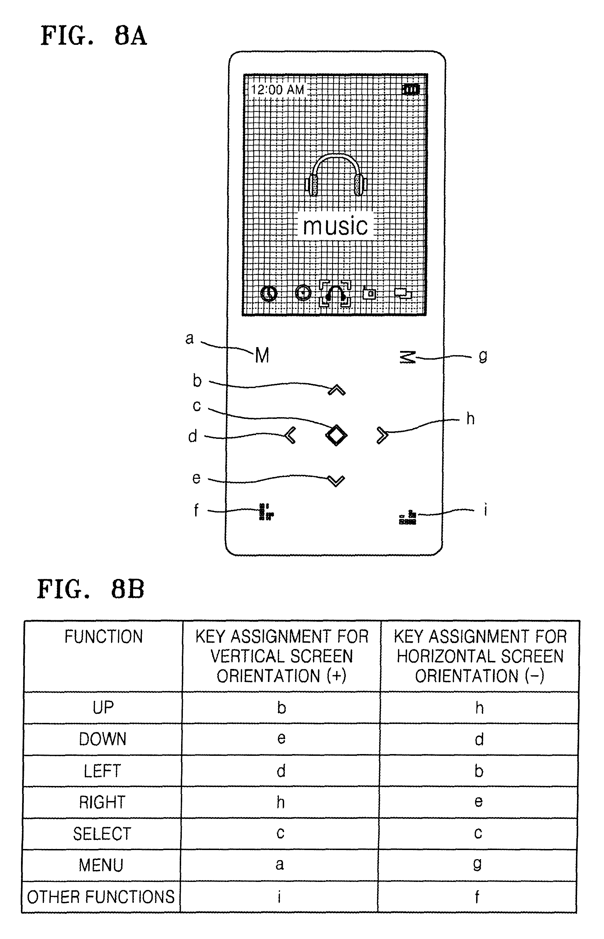

FIG. 5 is a diagram illustrating the processing of an input from the key-input unit 250 (operation 330) illustrated in FIG. 3 according to an embodiment of the present invention. Referring to FIGs. 5, 8A, and 8B, key variables and key mapping tables for each screen orientation are configured in advance. For example, as illustrated below, the variables:
KEY_SELECT =0, KEY_PLUS =1, KEY_MINUS =2, KEY_REW =3, KEY_FF =4, KEY_MENU =5, KEY_FUNCTION =6, and KEY_MAX = 7 are set in advance.

Also, data of a corresponding key position of the key mapping table and data input from the key-input unit 250 are compared while the value of the key variable, i ,is increased by one from zero (KEY_SELECT) to seven (KEY_MAX).
enumKEY_SELECT = 0,
KEY_PLUS = 1
KEY_MINUS = 2
KEY_REW = 3
KEY_FF = 4
KEY_MENU = 5
KEY_FUNCTION = 6
KEY_MAX = 7

The key mapping tables are set as below:
key table for horizontal screen orientation = c, b, e, d, h, a, i; and
key table for vertical screen orientation = c, h, d, b, e, g, f.

Thereafter, an input corresponding to a key pressed by a user is received (operation 510). Then, the key variable i is set to a first key, for example KEY_SELECT (operation 520). Next, it is checked whether key data corresponding to the variable i of the key table for the horizontal or the vertical screen orientation and the input key data matches (operation 530).

At this time, when the input key data matches key data corresponding to the variable of the key table for the horizontal or the vertical screen orientation, an event corresponding to the key variable i occurs (operation 550).

On the other hand, when the input key data does not match the key data corresponding to the variable of the key table for the horizontal or vertical screen orientation, the variable i of the key table is increased by one, and whether the input key data matches the table key data is repeatedly checked until the key data is the last key variable, for example, KEY_MAX (operation 540 and operation 550).

For example, when the key table for the horizontal screen orientation is set by, for example, sliding the portable electronic device, if the user presses "b," as illustrated in FIG. 8A, the controller 260 receives "b" data (operation 510). At this time, the key variable i is set to KEY_SELECT(0), and the 0-th data in the key table provided above ("c") is compared to the received data (operation 530). At this time, since the 0-th data in the key table ("c") does not match the received data, the key variable i is increased by one and set to KEY_PLUS(1) (operation 540). Also, since the key variable i is not KEY_MAX(7), the next data entry in the key table is compared to the received data (operation 530). The data corresponding to the key variable i in the key table ("b") and the received data ("b") are compared (operation 530). At this time, since the table data matches the received data, a KEY_PLUS event which has a value of the key variable i occurs (operation 550). When the received data is "a," as illustrated in FIG. 8A, a key event cannot occur since there is no data in the key table, as provided above, matching the received data.

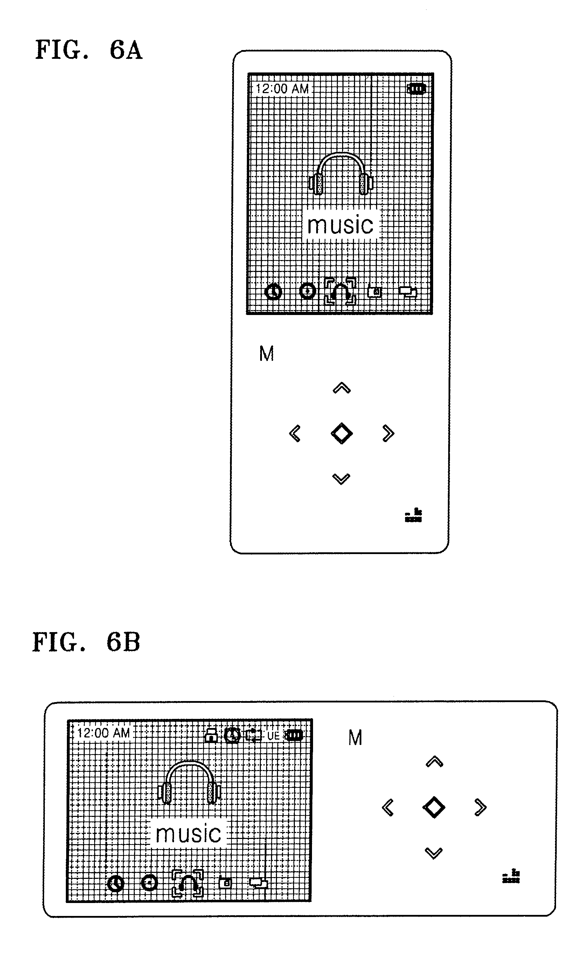

FIGs. 6A and 6B are diagrams illustrating user interfaces displayed in vertical and horizontal screen orientation modes when the portable electronic device is closed or open according to an embodiment of the present invention.

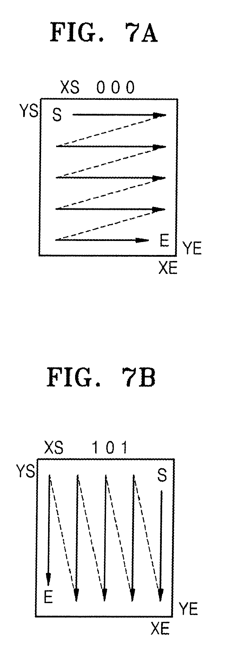

FIGs. 7A and 7B are diagrams illustrating a method of displaying in the vertical and horizontal screen orientation modes illustrated in FIGs. 6A and 6B. In the method of displaying the user interface, the display orientation is switched according to the register used to register a change in the screen orientation, which is, for example, built into an LCD integrated chip (IC).

FIG. 8A is a diagram illustrating hardware keys of a portable electronic device according to an embodiment of the present invention. FIG. 8B illustrates a key mapping table for keys represented in the input interface of the portable electronic device illustrated in FIG. 8A.

According to an aspect, light emitting diodes (LEDs) for keys may be lit so as to change positions of predetermined function keys according to the switching of the screen orientation.

Referring to FIG. 8A, although the portable electronic device has nine keys from a to i, only seven keys are visible as illustrated in FIGs. 6A and 6B. In the portable electronic device, the LEDs are disposed below the key pads. Also, the LEDs corresponding to the keys which are not used are turned off, so that the user can use only seven keys. In the key mapping table illustrated in FIG. 8B, key assignments for the vertical and horizontal screen orientations differ according to function.

As illustrated in FIG. 6A, in the vertical screen orientation mode, LEDs for g and f are turned off, and functions for the remaining keys are assigned for the vertical screen orientation mode (+) in FIG. 8B. On the other hand, in the horizontal screen orientation mode, LEDs for a and i are turned off, and functions for the remaining keys are assigned for the horizontal screen orientation mode (-) in FIG. 8B. Accordingly, a key can be made to appear or disappear by turning the LED corresponding to the key on or off, so that the user can find a key represented as "M" in the same position, which is in an upper left portion, for the horizontal or vertical display orientation mode.

Accordingly, as illustrated in FIG. 8B, in the key interface, the key mapping varies according to the horizontal or the vertical screen orientation modes. That is, when a key in the same physical position is pressed, a different function is performed according to the horizontal or the vertical screen orientation modes. Although keys in different physical positions are pressed, a same function is performed according to the horizontal or the vertical screen orientation modes. In FIG. 8B, a to i represent physical key numbers. For example, although the "h" key in the horizontal screen orientation mode and the "b" key in the vertical screen orientation mode are physically different, the user recognizes that the keys have the same function ( moving upward) since the positions of the keys are the same.

Aspects of the invention can also be embodied as computer-readable codes on a computer-readable recording medium. The computer-readable recording medium is any data storage device that can store data which can thereafter be read by a computer system. Examples of the computer-readable recording medium include read-only memory (ROM), random-access memory (RAM), CD-ROMs, magnetic tapes, floppy disks, optical data storage devices, and a computer data signal embodied in a carrier wave comprising a compression source code segment and an encryption source code segment (such as data transmission through the Internet). The computer-readable recording medium can also be distributed over network-coupled computer systems so that the computer-readable code is stored and executed in a distributed fashion.

According to aspects of the present invention, a graphic user interface of a portable electronic device can be switched between horizontal and vertical screen orientation modes based on a screen orientation of the portable electronic device, and the functions of a user interface are switched according to the screen orientation mode, thereby enabling a user to easily recognize the functions of the user interface.

Although a few embodiments of the present invention have been shown and described, it would be appreciated by those skilled in the art that changes may be made in this embodiment without departing from the scope of the invention, which is defined in the claims and their equivalents.

## Claims

**1.** A method of controlling a user interface of a portable electronic device, the method comprising:
sensing a screen orientation of the portable electronic device;
changing a display orientation of a graphic user interface of the portable electronic device according to the sensed screen orientation; and
changing an input interface of the portable electronic device according to the sensed screen orientation by changing an input mapping that maps user inputs to functions of the portable electronic device.

**2.** The method as claimed in claim 1, further comprising:
setting a first screen orientation mode when the sensed screen orientation of the portable device is a first screen orientation; and
setting a second screen orientation mode when the sensed screen orientation of the portable device is a second screen orientation.

**3.** The method as claimed in claim 2, wherein the sensing of the screen orientation comprises:
sensing the first screen orientation when a top and a bottom of a display of the portable electronic device are vertically related; and
sensing the second screen orientation when the top and the bottom of the display of the portable electronic device are horizontally related.

**4.** The method as claimed in claim 2, wherein the sensing of the screen orientation comprises:
checking whether a mainframe housing of the portable electronic device is connected to a user interface housing of the portable electronic device;
sensing the first screen orientation when the mainframe housing is connected to the user interface housing; and
sensing the second screen orientation when the mainframe housing is not connected to the user interface housing.

**5.** The method as claimed in claim 4, wherein the checking of whether the mainframe housing is connected to the user interface housing comprises:
checking whether a magnet of the mainframe housing is connected to a hall sensor of the user interface housing.

**6.** The method as claimed in claim 2, wherein the changing of the display orientation of the graphic user interface comprises:
displaying the graphic user interface in a first orientation when the first screen orientation mode is set; and
displaying the graphic user interface in a second orientation when the second screen orientation mode is set.

**7.** The method as claimed in claim 6, wherein information about the graphic user interface in the first orientation is stored in advance in a first coordinate table and information about the graphic user interface in the second orientation is stored in advance in a second coordinate table.

**8.** The method as claimed in claim 2, wherein the changing of the input interface comprises:
setting a first input mapping when the first screen orientation mode is set; and
setting a second input mapping when the second screen orientation mode is set.

**9.** The method as claimed in claim 8, wherein the first input mapping maps a first user input to a first function, and the second input mapping maps the first user input to a second function and a second user input to the first function.

**10.** The method as claimed in claim 8, wherein the changing of the input interface further comprises:
setting a first position of light emitting diodes (LEDs) on the input interface when the first screen orientation mode is set; and
setting a second position of the LEDs on the input interface when the second screen orientation mode is set.

**11.** The method as claimed in claim 1, further comprising:
receiving a sensor signal indicating the sensed screen orientation;
comparing a value of the sensor signal to a value of a flag corresponding to a screen orientation mode; and
changing the screen orientation mode when the value of the sensor signal is different than the value of the flag, wherein
the display orientation and the input mapping correspond to the screen orientation mode.

**12.** The method as claimed in claim 1, wherein the changing of the display orientation of the graphic user interface comprises:
changing data stored in a register storing the display orientation.

**13.** A device to control a screen orientation of a user interface of a portable electronic device, the device comprising:
a screen orientation sensing unit (210, 211) to sense the screen orientation of the portable electronic device;
a display unit (110-1, 240)to display a graphic user interface;
an input unit (250) comprising an input interface to receive inputs from a user; and
a controller (260) to change a display orientation of the graphic user interface according to the sensed screen orientation, and to change the input interface according to the sensed screen orientation by changing an input mapping that maps user inputs to functions of the portable electronic device.

**14.** The device as claimed in claim 13, wherein:
the controller is adapted to set a first screen orientation mode when the sensed screen orientation is a first screen orientation; and to set
a second screen orientation mode when the sensed screen orientation is a second screen orientation.

**15.** The device as claimed in claim 14, wherein:
the screen orientation sensing unit (210, 211) is adapated to sense the first screen orientation when a top and a bottom of a display of the portable device are vertically related; and to
sense the second screen orientation when the top and the bottom of the display of the portable device are horizontally related.

**16.** The device as claimed in claim 13, further comprising:
a mainframe housing (120) to house a main body of the portable electronic device; and
a user interface housing (110) to house the display unit and the input unit, wherein
the screen orientation sensing unit (210, 211) comprises a hall sensor (210) to determine between at least a first screen orientation and a second screen orientation.

**17.** The device as claimed in claimed in claim 16, wherein:
the mainframe housing (120) comprises a magnet (211);
the user interface housing (110) comprises the hall sensor (210); and
the hall sensor is adapted to determine the screen orientation by sensing the relative position of the magnet with respect to the hall sensor.

**18.** The device as claimed in claim 14, wherein:
the controller (260) is adapted to control the display unit (240) to display the graphic user interface in a first orientation when the first screen orientation mode is set; and
to control the display unit to display the graphic user interface in a second orientation when the second orientation mode is set.

**19.** The device as claimed in claim 14, wherein:
the controller is adapted to set a first input mapping when the first screen orientation mode is set; and to
set a second input mapping when the second screen orientation mode is set.

**20.** The device as claimed in claim 19, wherein the input interface (250) comprises keys and LEDs for the keys.

**21.** The device as claimed in claim 20, wherein:
the controller is adapted to set a first position of the LEDS on the input interface when the first screen orientation mode is set; and to
set a second position of the LEDs on the input interface when the second screen orientation mode is set.

**22.** The device as claimed in claim 13, wherein the screen orientation sensing unit (210, 211) is adapted to generate a screen orientation signal having a value corresponding to the sensed screen orientation.

**23.** The device as claimed in claim 22, wherein:
the controller is adapted to compare a value of the screen orientation signal to a value of a flag corresponding to a screen orientation mode and to
change the screen orientation mode when the value of the screen orientation signal is different than the value of the flag, wherein
display orientation and the input mapping correspond to the screen orientation mode.

**24.** The device as claimed in claim 19, wherein:
the first input mapping is adapted to map a first user input to a first function; and
the second input mapping is adpated to map the first user input to a second function and a second user input to the first function..

**25.** A method of controlling a user interface of a portable device, the method comprising:
displaying a first graphical user interface corresponding to a first input mapping;
sensing a change in a screen orientation of the portable device; and
switching the first graphical interface corresponding to the first input mapping to a second graphical user interface corresponding to a second input mapping according to the change in the screen orientation of the portable device.

**26.** The method as claimed in claim 25, wherein the sensing of the change in the screen orientation comprises sensing a change from a first screen orientation to a second screen orientation.

**27.** The method as claimed in claim 26, wherein:
the first screen orientation comprises a top and a bottom of a display of the portable device being vertically related; and
the second screen orientation comprises the top and the bottom of the display of the portable device being horizontally related.

**28.** The method as claimed in claim 25, wherein the sensing of the change in the screen orientation comprises:
checking whether a mainframe housing of the portable device is connected to a user interface housing of the portable device.

**29.** The method as claimed in claim 28, wherein the checking of whether the mainframe housing is connected to the user interface housing comprises:
checking whether a magnet of the mainframe housing is connected to a hall sensor of the user interface housing.

**30.** The method as claimed in claim 25, wherein information about the first graphical user interface corresponding to the first input mapping is stored in advance in a first coordinate table and information about the second graphical user interface corresponding to the second input mapping is stored in advance in a second coordinate table.

**31.** The method as claimed in claim 25, wherein the first input mapping maps a first user input to a first function, and the second input mapping maps the first user input to a second function and a second user input to the first function.

**32.** A method of controlling a user interface of a portable electronic device, the method comprising:
sensing a screen orientation of the portable electronic device; and
changing an input interface of the portable electronic device according to the sensed screen orientation of the portable electronic device by changing an orientation of functions of input keys to correspond to the sensed screen orientation.

**33.** The method as claimed in claim 32, further comprising:
changing a display orientation of a graphic user interface of the portable electronic device according to the sensed screen orientation of the portable electronic device.

**34.** A portable device comprising:
a first body (120) comprising a speaker unit (120-1);
a second body (110) comprising a display unit (110-1);
a sliding unit to slide the second body with respect to the first body;
a memory (220) to store a first graphical user interface and a second graphical user interface;
a sensor unit (210) to sense a sliding of the second body with respect to the first body; and
a controller (260) to control the first graphical user interface or the second graphical user interface to be displayed on the display unit according to an output signal of the sensor unit.

**35.** The portable device as claimed in claim 34, further comprising:
an input unit (250) comprising an input interface to receive inputs from a user,
wherein the control unit (260) is adapted to change the input interface according to the output signal of the sensor unit by changing an input mapping that maps user inputs to functions of the portable electronic device.

**36.** The portable device as claimed in claim 34,
wherein the speaker unit (120-1) is exposed as the second body slides with respect to the first body.

**36.** A computer-readable recording medium encoded with the method of claim 1 implemented by a computer.

**37.** A computer-readable recording medium encoded with the method of claim 25 implemented by a computer.

**38.** A computer-readable recording medium encoded with the method of claim 32 implemented by a computer.
